# EUROPÄISCHE PATENTSCHRIFT

(11) **EP 0 645 871 B1**
(45) Veröffentlichungstag und Bekanntmachung des Hinweises auf die Patenterteilung: **13.08.1997**
(21) Anmeldenummer: 94114001.4
(22) Anmeldetag: 07.09.1994
(51) Int. Cl.: H02K 3/24

(54) **Einrichtung zur elektrischen und mechanischen Verbindung der Teilleiter zur Zuführung bzw. Abführung der Kühlflüssigkeit**
Electrical and mechanical connection of cooled part conductors for the inlet and outlet of cooling liquid
Connexion électrique et mécanique de sous-conducteurs pour l'arrivée et le départ du liquide de refroidissement

(30) Priorität: 20.09.1993 CH 2832/93
(43) Veröffentlichungstag der Anmeldung: 29.03.1995
(73) Patentinhaber: ASEA BROWN BOVERI AG, 5400 Baden (CH)
(72) Erfinder: Paroz, José-Pierre, CH-1400 Yverdon-les-Bains (CH)

(56) Entgegenhaltungen:
- CH-A- 357 799
- FR-A- 2 549 654
- US-A- 3 955 110
- AEG Mitteilungen 52 (1962) 9/10; K. WARNKE "WassergekUhlte Turbogeneratoren", Seiten 429-438
- SOVIET INVENTIONS ILLUSTRATED, El Sektion, Woche 8431, 12. September 1984, DERWENT PUBLICATIONS LTD., London; & SU-A-1056 368 (KHARK)

## Beschreibung

### TECHNISCHES GEBIET

Die Erfindung bezieht sich auf eine zur Einrichtung zur elektrischen und mechanischen Verbindung der Teilleiter sowie zur Zuführung bzw. Abführung der Kühlflüssigkeit zu bzw. von den hohlen Leitern der Ständerwicklungsstäbe elektrischer Maschinen, bei der die hohlen und gegebenenfalls die massiven Leiter des Wicklungsstabes von einem metallischen Bauteil zusammengefasst sind, welches Bauteil mit einer Wasserkammer verbunden ist, und die Wasserkammer Anschlussarmaturen für die Zu- bzw. Abfuhr der Kühlflüssigkeit aufweist, und wobei metallisches Bauteil, Wasserkammer und Anschlussarmaturen von einer Isolierhülse umgeben sind.

Eine Einrichtung dieser Art ist bekannt aus dem Aufsatz von K.Warnke "Wassergekühlte Turbogeneratoren", AEG Mitt.52 (1962) 9/10, Seiten 429 - 438, Bild 8 auf Seite 433.

### TECHNOLOGISCHER HINTERGRUND UND STAND DER TECHNIK

Im Ständerwickelkopf wassergekühlter elektrischer Maschinen wird die Kühlflüssigkeit von ringförmigen Sammelleitungen über Isolierschläuche den sogenannten Wasserkammern am Ende der Leiterstäbe zugeführt. Diese Wasserkammern dienen zur hydraulischen und mechanischen Verbindung der Hohlleiter eines Stabes. Die Wasserkammer ist mechanisch mit einem metallischen Bauteil, das der elektrischen Verbindung der Hohlleiter und gegebenenfalls der Massivleiter des Wicklungsstabes dient, verbunden. Die Wasserkammer ist ferner mit Anschlussarmaturen zur Zu- und Abfuhr der Kühlflüssigkeit versehen. Diese aus metallischem Bauteil, Wasserkammer und Anschlussarmatur bestehendes Element wird gemeinhin als Oese bezeichnet. Die Oesen sind grundsätzlich an den Phasentrennungen mit Isolierkappen oder Isolierhülsen umgeben. Zur Erhöhung der elektrischen Sicherheit werden darüber hinaus heute alle Oesen in dieser Weise isoliert.

Das Aufbringen derartiger Isolierhülsen ist aufgrund des komplexen Aufbaus der Oese sehr zeitaufwendig, wie ein Blick auf Bild 8 der eingangs genannten Druckschrift zeigt, und muss in mühsamer Handarbeit erfolgen. Meist werden die Isolierhülsen nachträglich mit einem Zweikomponenten-Schaum ausgeschäumt. Zu diesem Zweck müssen alle noch vorhandenen Spalten abgedichtet werden, um das Austreten des Schaumes aus der Isolierhülse zu verhindern.

### KURZE DARSTELLUNG DER ERFINDUNG

Der Erfindung liegt die Aufgabe zugrunde, eine Einrichtung zur Zuführung bzw. Abführung der Kühlflüssigkeit der genannten Art zu schaffen, die wirtschaftlich herzustellen und einfach zu montieren ist.

Diese Aufgabe wird erfindungsgemäss dadurch gelöst, dass die Isolierhülse einen ein- oder mehrteiligen Isolierteil umfasst, der im wesentlichen von innen her über das metallische Bauteil, die Wasserkammer und die Anschlussarmaturen geschoben ist und diese radial und axial überragt, und dass sowohl im Bereich des metallischen Bauteils als auch im Bereich der Anschlussarmaturen Mittel zum Ausfüllen der Distanzen zwischen dem metallischen Bauteil und dem Isolierteil bzw. zwischen den Anschlussarmaturen und dem Isolierteil vorgesehen sind.

Der Vorteil der Erfindung ist insbesondere darin zu sehen, dass keine der jeweiligen Einbausituation angepassten Bauteile benötigt werden. Auch entfällt das bisher als unumgänglich angesehene Ausschäumen der Isolierhülsen. Damit reduzieren sich die Montagezeiten, was insbesondere bei Retrofit-Vorhaben von Vorteil ist.

Ausführungsbeispiele der Erfindung sowie die damit erzielbaren Vorteile werden nachfolgend anhand der Zeichnung näher erläutert.

### KURZE BESCHREIBUNG DER ZEICHNUNG

In der Zeichnung ist ein Ausführungsbeispiel der Erfindung schematisch dargestellt, und zwar zeigt:
- Fig.1: eine erstes Ausführungsbeispiel einer erfindungsgemässen Einrichtung in perspektivischer Darstellung;
- Fig.2: einen Längsschnitt durch die Anschlusseinrichtung gemäss Fig.1;
- Fig.3: einen Querschnitt durch die Anschlusseinrichtung nach Fig.2 auf der Höhe der Anschlussarmaturen längs deren Linie AA;
- Fig.4: einen weiteren Querschnitt durch die Anschlusseinrichtung nach Fig.2 auf der Höhe des metallischen Bauteils längs deren Linie BB;
- Fig.5: eine Abwandlung der Ausführung gemäss Fig.3, wobei als Distanziermittel Schaumstoff vorgesehen ist;
- Fig.6: einen Querschnitt durch die Anschlusseinrichtung nach Fig.5 auf der Höhe der Anschlussarmaturen längs deren Linie CC;
- Fig.7: eine Abwandlung der Ausführungsform nach Fig.6;
- Fig.8: verschieden Ausführungsformen von mehrteiligen Isolierteilen mit L-förmigen Isolierteilen (Fig.8a, b und c) bzw. C-förmigen Isolierteilen (Fig.8d und e).

### WEGE ZUR AUSFÜHRUNG DER ERFINDUNG

Im Ständerwickelkopf wassergekühlter elektrischer Maschinen wird die Kühlflüssigkeit von ringförmigen Sammelleitungen über Isolierschläuche 1 den sogenannten Wasserkammern 2 am Ende der Leiterstäbe 3 zugeführt. Diese Wasserkammern 2 dienen zur elektrischen und mechanischen Verbindung der massiven 4 und hohlen Teilleiter 5 eines Stabes, der elektrischen Verbindung verschiedener Teilleiter und sind mit Anschlussarmaturen 6 zur Zu- und Abfuhr der Kühlflüssigkeit versehen.

Eine derartige Wasserkammer ist in der US-A-4,629,917 beschrieben und dargestellt. Die massiven 4 und die hohlen Teilleiter 5 des Wicklungsstabes 1 sind von einem metallischen Bauteil 7 zusammengefasst, das als die Stabenden zumindest teilweise umfassender Bügel oder Hülse ausgebildet und mit diesen Stabenden verbunden ist. Dabei ragen ausschliesslich die hohlen Teilleiter 5 aus dem metallischen Bauteil heraus. Sie sind in einer Einlötplatte 8 flüssigkeitsdicht befestigt. Die Einlötplatte 8 ist an der Stirnseite des metallischen Bauteils 7 mittels Distanzstücken 9 befestigt. Nähere Einzelheiten sind der genannten US-Patentschrift zu entnehmen, auf die hier ausdrücklich bezug genommen wird.

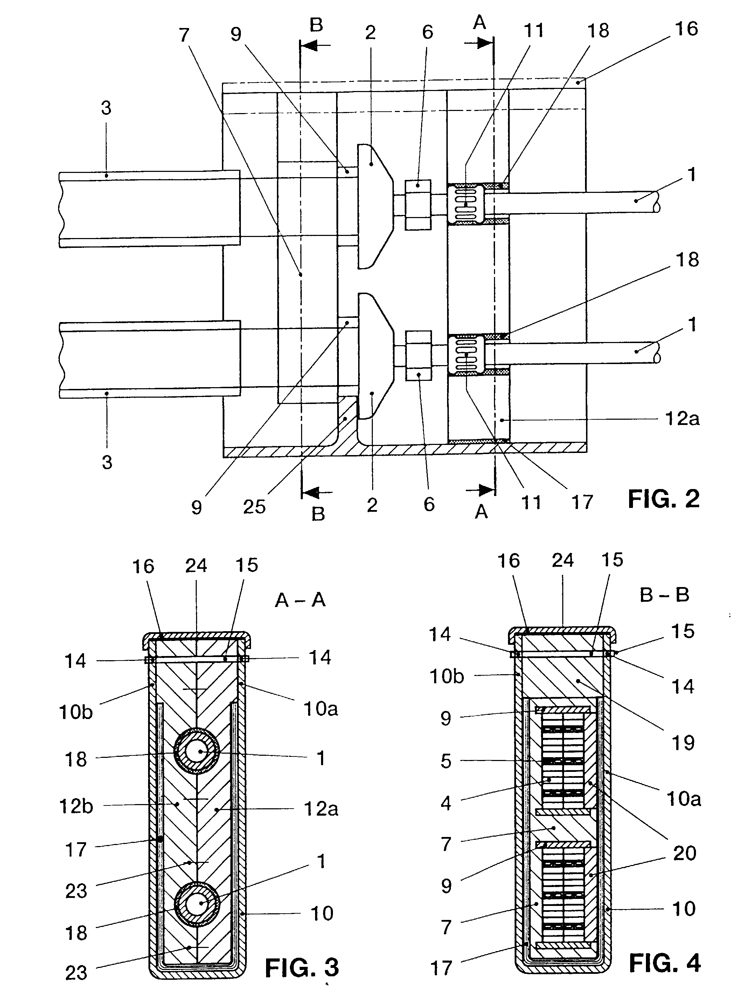

Wie ein Blick auf Fig.3 dieser Patentschrift oder auch auf Bild 8 der AEG-Mitt. a.a.O. zeigt, gestaltet sich eine Isolierung dieser Wasserkammern mittels Isolierkappen oder Isolierhülsen recht schwierig und zeitaufwendig. Hier setzt nun die Erfindung ein. Sie wird am Beispiel der aus der US-A-4,629,917 bekannten Wasserkammer erläutert, beschränkt sich selbstverständlich nicht auf solche Ausführungen.

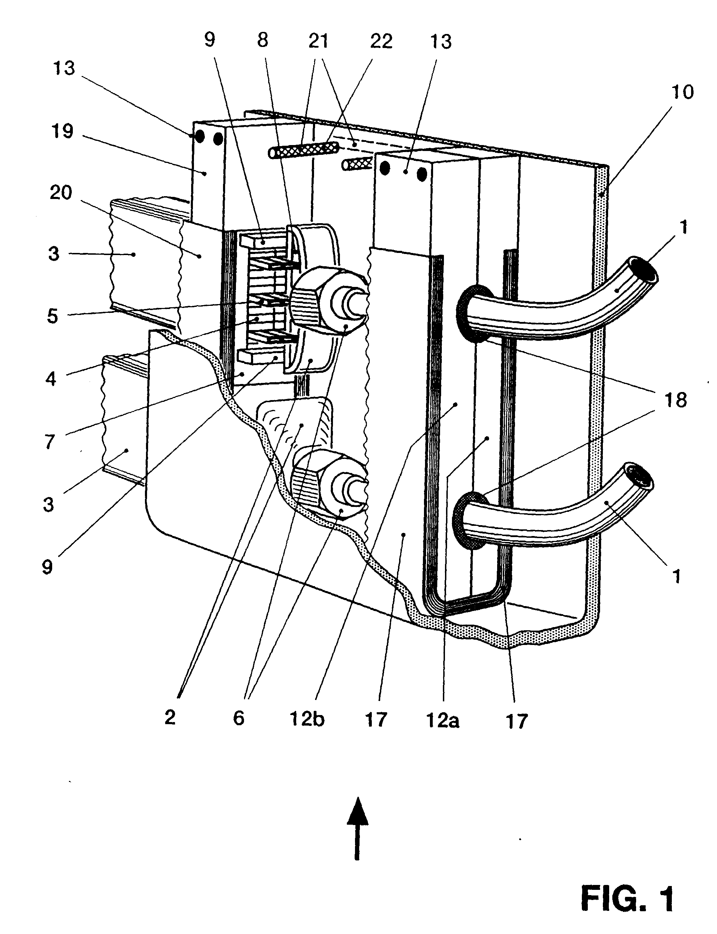

Radial von innen her (Pfeil in Fig.1) ist über die aus metallischen Bauteil 7, Wasserkammer 2 und Anschlussarmaturen bestehende Anschlusseinrichtung ein U-förmiger Isolierteil 10 mit Schenkeln 10a, 10b und Boden 10c geschoben. Das Isolierteil besteht aus glasfaserverstärktem Kunststoff oder einem Schichtpresstoff. In Axialrichtung erstreckt sich das Isolierteil 10 bis über die Quetschhülsen 11 der Anschlussarmaturen 6 am freien Ende der Anschlusseinrichtung und überragt das metallischen Bauteil 7 der Wasserkammer in Richtung Stator. Auch in radialer Richtung steht das Isolierteil 10 über die äussere Wasserkammer vor. Auf der Höhe der Quetschhülsen 11 sind erste Distanziermittel vorgesehen. Diese umfassen paarig angeordnete Distanzstücke 12a und 12b. Diese sind auf ihren einander zugewandten Flächen mit halbkreisförmigen axial verlaufenden Nuten versehen, in welche die Quetschhülsen 11 zu liegen kommen. Die den Schenkeln 10a und 10b zugewandten Flächen sind mit einer Materialausnehmung versehen, die bis oberhalb der oberen Nut reicht. Die Gesamtdicke der beiden Distanzstücke oberhalb der Ausnehmung in azimutaler Richtung gesehen entspricht der lichten Weite des U-förmigen Isolierteils 10. Azimutal verlaufende Bohrungen 13 in den Distanzstücken 12a und 12b fluchten mit Bohrungen 14 an den äusseren Schenkelenden und dienen zur Aufnahme von Befestigungsstiften 15. Nach aussen hin ist der U-förmige Isolierteil 10 durch einen Deckel 16 verschlossen (Fig.3 und 4).

In die Ausnehmung ist eine (im Einbauzustand verformbare) mit Kunstharz getränkte Glasfasermatte oder ein Glasfaserpolster 17 eingelegt, das diese Ausnehmung vollständig ausfüllt. Auch zwischen den Quetschhülsen 11 bzw. den Isolierschläuchen 1 und den Distanzstücken 12a und 12b sind (im Einbauzustand verformbare) Zwischenlagen 18 aus kunstharzgetränkten Glasfasern oder Glasfasergewebe vorgesehen.

Auf der Höhe des metallischen Bauteils 7 sind zweite Distanziermittel vorgesehen, deren Anordnung aus dem Querschnitt gemäss Fig.4 hervorgeht. Diese umfassen neben einem äusseren Isolierklotz 19 Füllstücke 20 zwischen dem einen Schenkel 10a des U-förmigen Isolierteils 10 und den Leiterstäben. Die Füllstücke können entfallen, wenn das im Beispielsfall E-Profil aufweisende metallische Bauteil 7 symmetrisch aufgebaut, z.B. ein H-förmiges Profil aufweist. Die Dicke des Isolierklotzes 19 (in azimutaler Richtung gesehen) entspricht der lichten Weite zwischen den Schenkeln 10a und 10b. Analog den ersten Distanziermitteln ist auch hier eine (im Einbauzustand verformbare) Glasfasermatte oder Glasfaserpolster 17 eingelegt das den verbliebenen Raum zwischen dem metallischen Bauteil 7 bzw. den Füllstücken 20 und dem U-förmigen Isolierteil 10 vollständig ausfüllt.

Azimutal verlaufende Bohrungen 13 im Isolierklotz 19 fluchten mit Bohrungen 14 an den äusseren Schenkelenden und dienen zur Aufnahme von Befestigungsstiften 15.

Der Deckel 16 ist mittels Glasfaserkordern 21, welche durch Bohrungen 22 am äusseren Ende der Schenkel 10a und 10b zwischen dem ersten und dem zweiten Distanziermittel am U-förmigen Isolierteil 10 befestigt.

Der Montagevorgang gestaltet sich gegenüber den bekannten Anordnung sehr einfach:
Nach Aufbringen der Zwischenlagen 18, die vorgängig mit Isolierharz getränkt aber noch nicht ausgehärtet sind, auf die Quetschhülsen 11 werden die Distanzstücke 12a und 12b aufgesetzt und es werden die Polster 17, die ebenfalls mit Isolierharz getränkt aber noch nicht ausgehärtet sind, in die Ausnehmungen gelegt. Montagestifte 23 erleichtern dabei die Montage. Nach dem Einbringen der Füllstücke 20 wird auf der Höhe des metallischen Teils 7 ebenfalls ein mit Isolierharz getränktes aber nocht nicht ausgehärtetes Polster 17 von innen her um das metallische Teil 7 geschlungen. Auf die derart vorbereitete Wasserkammer wird nun von innen her das U-förmige Isolierteil 10 geschoben. Nach dem Einlegen des Isolierkotzes 19 wird der Verband mittels der Stifte 15 gesichert.

Eine Sicherung gegen axiale Verschiebung während der Montage, des Aushärtens des Isolierharzes oder auch im späteren Betrieb besteht darin, am Boden 10c und/oder an den Schenkeln 10a, 10b des U-förmigen Isolierteils 10 einen nach innen vorspringenden Bund oder Kragen 25 (Fig.2) vorzusehen, der in die Distanz zwischen metallischen Bauteil 7 und Einlötplatte 8 hineinragt und diese Distanz in axialer Richtung mehr oder weniger ausfüllt. Optional können alle Flächen, die im eingebauten Zustand aufeinanderliegen, z.B. die Trennflächen der beiden Distanzstücke 12a und 12b, die Flächen des Distanzklotzes 19 und die der Füllstücke 20 mit Isolierharz bestrichen werden. Zum Abschluss wird der Deckel 16 aufgesetzt und mittels der isolierharzgetränkten Glaskordeln befestigt. Um eventuell auftretende Vibrationen zu verhindern, ist vorzugsweise zwischen dem Deckel 16 und den darunter liegenden Flächen der Distanzstücke 12a, 12b bzw. des Isolierklotzes eine mit Isolierharz getränkte dünne Glasfasermatte eingelegt.

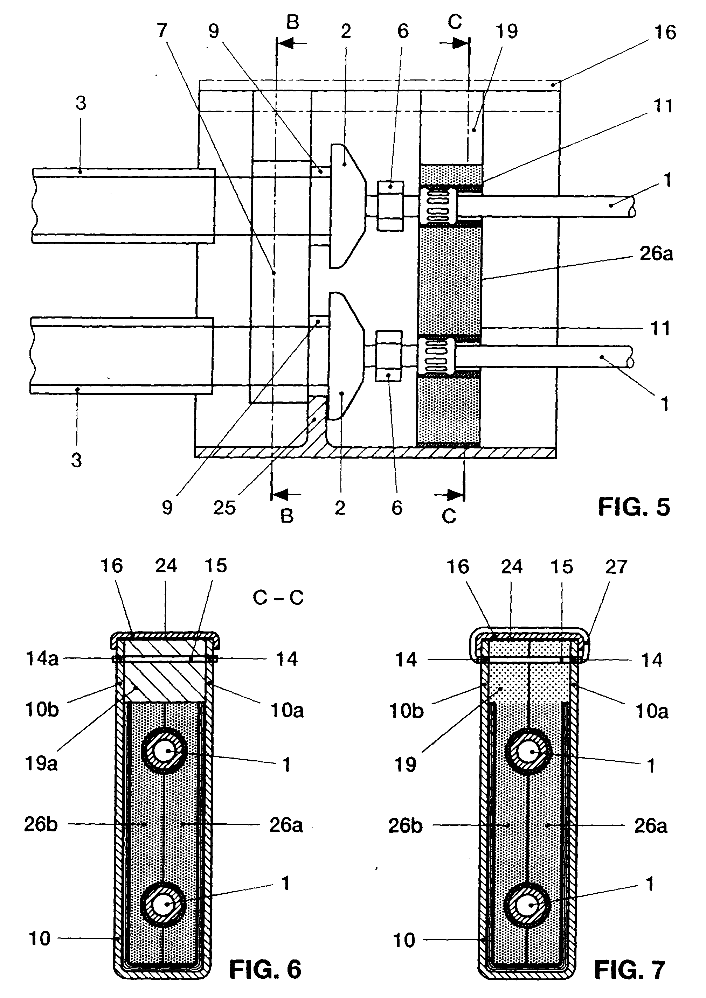

Anstelle von Distanzstücken 12a, 12b und den optionalen Polstern 17, 18 im Bereich der Anschlussarmaturen können als Distanziermittel in der Montagephase nachgiebige, mit Isolierharz getränkte oder tränkbare Schaumstoffteile 26a, 26b verwendet werden, wie es in Fig.5 und 6 verdeutlicht ist. Derartige Schaumstoffe, z.B. auf Melaminbasis, sind von schwammartiger Konsistenz, lassen sich einfach bearbeiten und sind bis Isolierklasse H verfügbar. Für den vorliegenden Zweck wird der Schaumstoff auf etwa den auszufüllenden Querschnitt zugeschnitten und vor dem Aufschieben des U-förmigen Isolierteils 10 von beiden Seiten auf die Anschlussarnaturen aufgesetzt. Das Tränken mit Isolierharz kann dabei vor dem Aufschieben des U-förmigen Isolierteils 10 oder erst danach erfolgen. Im letztgenannten Fall erfolgt das Tränken durch Injizieren des Harzes von aussen her.

Analog der Distanzierung im Bereich des metallischen Bauteils 7 kann aber auch radial aussen ein Distanzklotz 19a vorgesehen werden, der mit einem Stift 14a gesichert ist. Die beiden Schaumstoffteile 26a und 26b können sich aber auch über die gesamte radiale Höhe der Isolierhülse erstrecken (vgl. Fig.7). Der Zusammenhalt des U-förmigen Isolierteils 10 sowie die Fixierung des Deckels 16 erfolgt dabei vorzugsweise durch mit Isolierharz getränkte Glasfaserkordeln 27, die mit einem nadelartigen Werkzeug durch die Bohrungen 14 und die Schaumstoffteile 26a, 26b gezogen werden.

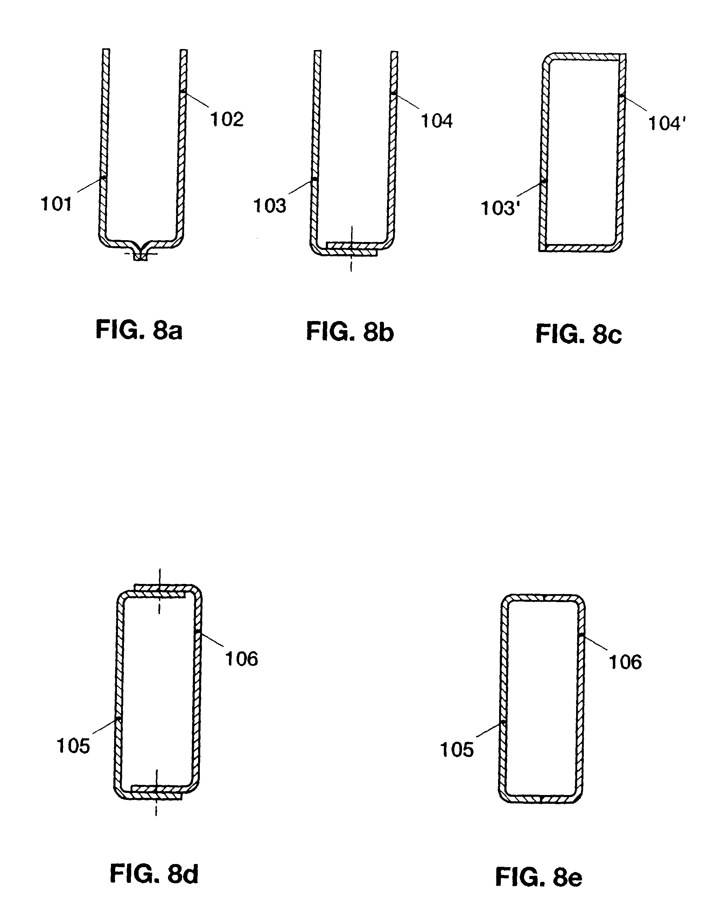

Bei allen vorstehend beschriebenen Ausführungen wurde von einem einteiligem Isolierteil 10 mit U-förmigem Querschnitt ausgegangen. Ohne den Rahmen der Erfindung zu verlassen, sind jedoch auch andere Querschnitte möglich. In Fig.8 sind solche alternative Ausführungsformen des Isolierteils schematisch dargestellt:

So zeigt Fig.8a eine Ausführung eines U-förmigen Isolierteils, das aus zwei L-förmigen Isolierteilen 101 und 102 zusammengesetzt ist, die radial innen untereinander verbunden sind.

Fig.8b zeigt eine Variante mit zwei L-förmigen Isolierteilen 103, 104, wobei sich die kurzen Schenkel überlappen.

Bei der Variante nach Fig.8c werden gleichfalls L-förmige Isolierteile 103', 104' verwendet, wobei jedoch der eine kurze Schenkel radial innen, der andere kurze Schenkel radial aussen zu liegen kommt.

Bei der Variante nach Fig.8d schliesslich sind C-förmige Isolierteile 105, 106 vorgesehen, deren freie Schenkel sich radial innen und radial aussen überlappen oder gemäss Fig. 8e stumpf aneinanderstossen.

Der Zusammenhalt der beiden Isolierteile kann dabei entweder durch Stifte oder auch durch Bandagen aus mit Isolierharz getränkten Glasfaserkorderln oder -lunten erfolgen. Bei den Varianten nach den Figuren 8c - 8e wird darüber hinaus kein separater Deckel benötigt.

Nach dem Aushärten des Isolierharzes ist die so entstandene Isolierhülse fest mit dem metallischen Bauteil 7, der Wasserkammer 2 und den zugehörigen Anschlussarmaturen 6, 11 verbunden und hält allen Betriebsbeanspruchungen stand und zeichnet sich durch geringen Platzbedarf und wenig individuelle Anpassungsarbeiten aus. Besonderer Vorteil der Erfindung ist dabei, dass ein Ausschäumen des Innenraumes der Isolierhülse entbehrlich ist. Dies verkürzt die Montagezeit erheblich und führt bei Retrofit-Vorhaben zu kleineren Stillstandzeiten.

Die Erfindung wurde anhand eines Ausführungsbeispiels, das spezifisch auf eine Wasserkammer gemäss der US-A-4,629,917 abgestellt ist beschrieben und dargestellt. Sie ist jedoch nicht auf derartige Wasserkammergeometrien beschränkt. In der Regel müssen nur die Distanzierungsmittel der Form und Grösse der Wasserkammern angepasst werden. Auch lässt sie sich ohne weiteres bei sogenannten Doppelstäben anwenden.

### BEZEICHNUNGSLISTE

- 1: Isolierschläuche
- 2: Wasserkammern
- 3: Leiterstäbe
- 4: massive Teilleiter
- 5: hohle Teilleiter
- 6: Anschlussarmaturen
- 7: metallisches Bauteil
- 8: Einlötplatte
- 9: Distanzstücke
- 10: U-förmiger Isolierteil
- 10a,10b: Schenkel von 10
- 10c: Boden von 10
- 11: Quetschhülsen
- 12a,12b: Distanzstücke
- 13: Bohrungen in 12a,12b
- 14: Bohrungen in 10,10b
- 15: Befestigungsstifte
- 16: Deckel
- 17: Polster
- 18: Zwischenlagen
- 19: Isolierklotz
- 20: Füllstücke
- 21: Glasfaserkordel
- 22: Bohrungen in 10a und 10b
- 23: Montagestifte
- 24: Glasfasermatte
- 25: Bund an 10c
- 26a,26b: Schaumstoffteile
- 27: Glasfaserkordel
- 101,102: Hälften
- 103,104: L-förmige Isolierteile
- 105,106: C-förmige Isolierteile

## Patentansprüche

1. Einrichtung zur elektrischen und mechanischen Verbindung der Teilleiter sowie zur Zuführung bzw. Abführung der Kühlflüssigkeit zu bzw. von den hohlen Leitern (5) der Ständerwicklungsstäbe (3) elektrischer Maschinen, bei der die hohlen (5) und gegebenenfalls die massiven Leiter (4) des Wicklungsstabes von einem metallischen Bauteil (7) zusammengefasst sind, welches Bauteil mit einer Wasserkammer (2) verbunden ist, und die Wasserkammer (2) Anschlussarmaturen (6,11) für die Zu- bzw. Abfuhr der Kühlflüssigkeit aufweist, und metallisches Bauteil (7), Wasserkammer (2) und Anschlussarmaturen (6,11) von einer Isolierhülse umgeben sind, dadurch gekennzeichnet, dass die Isolierhülse einen ein- oder mehrteiligen Isolierteil (10) umfasst, der im wesentlichen von innen her über das metallische Bauteil (7), die Wasserkammer (2) und die Anschlussarmaturen (6,11) geschoben ist und diese radial und axial überragt, und dass sowohl im Bereich des metallischen Bauteils (7) als auch im Bereich der Anschlussarmaturen Mittel (12a,12b,17 bzw.17,19,20) zum Ausfüllen der Distanzen zwischen dem metallischen Bauteil und dem Isolierteil (10) bzw. zwischen den Anschlussarmaturen (6,11) und dem Isolierteil (10) vorgesehen sind.

2. Anschlusseinrichtung nach Anspruch 1, dadurch gekennzeichnet, dass das Isolierteil (10) einstückig ausgebildet ist und U-förmigen Querschnitt aufweist.

3. Anschlusseinrichtung nach Anspruch 1, dadurch gekennzeichnet, dass das Isolierteil (10) aus zwei Isolierteilen (103,104) mit L-förmigem Querschnitt besteht, wobei die kurzen Schenkel radial innen liegen (Fig.8b).

4. Anschlusseinrichtung nach Anspruch 2 oder 3, dadurch gekennzeichnet, dass die Isolierhülse ferner einen Deckel (16) aus Isoliermaterial umfasst, der von aussen auf die freien Schenkel (10a,10b) des U-förmigen Isolierteils (10) bzw. der L-förmigen Isolierteile geschoben und an diesen Schenkeln befestigt ist.

5. Anschlusseinrichtung nach Anspruch 4, dadurch gekennzeichnet, dass der Deckel (16) U-förmig ausgebildet ist und aussen über die freien Schenkel (10a,10b) des U-bzw. der L-förmigen Teile geschoben und vorzugsweise mittels Bandagen (21) am Isolierteil (10) befestigt ist.

6. Anschlusseinrichtung nach Anspruch 1, dadurch gekennzeichnet, dass das Isolierteil zweiteilig ausgebildet ist und aus zwei C-förmigen Schalen (105,106) besteht (Fig.8d,Fig.8e).

7. Anschlusseinrichtung nach Anspruch 1, dadurch gekennzeichnet, dass das Isolierteil zweiteilig ausgebildet ist und aus zwei L-förmigen Isolierteilen (103',104') besteht, wobei deren kurzen Schenkel einmal radial innen und einmal radial aussen liegen (Fig.8c).

8. Anschlussveinrichtung nach einem der Ansprüche 1 bis 7, dadurch gekennzeichnet, dass im Bereich der Anschlussarmaturen (6,11) die Distanziermittel zweiteilig (12a,12b) ausgebildet sind, aus Isoliermaterial bestehen und sich von beiden Seiten an die Anschlussarmaturen anschmiegen.

9. Anschlusseinrichtung nach einem der Ansprüche 1 bis 8, dadurch gekennzeichnet, dass der Isolierteil (10) mittels Stiften (14) an den besagten Distanziermitteln befestigt ist.

10. Anschlusseinrichtung nach einem der Ansprüche 1 bis 9, dadurch gekennzeichnet, dass die den Stabenden benachbarten Distanziermittel als in der Montagephase nachgiebige Polster (17) oder Matten ausgebildet sind.

11. Anschlusseinrichtung nach Anspruch 10, dadurch gekennzeichnet, dass zusätzlich Isolierklötze (19) und/oder Füllstücke (20) aus Isoliermaterial zum Ausfüllen der Distanzen vorgesehen sind.

12. Anschlusseinrichtung nach einem der Ansprüche 1 bis 11, dadurch gekennzeichnet, dass zwischen den Anschlussarmaturen (6,11) und den Distanziermitteln und/oder zwischen den Distanziermitteln (12a,12b) und dem Isolierteil (10) in der Montagephase nachgiebige, mit Isolierharz getränkte Polster oder Lunten eingelegt sind.

13. Anschlusseinrichtung nach einem der Ansprüche 1 bis 7, dadurch gekennzeichnet, dass als Distanziermittel ein in der Montagephase nachgiebiger, mit Isolierharz getränkter offenporiger, nachgiebiger Schaumstoff vorgesehen ist.

14. Anschlusseinrichtung nach einem der Ansprüche 1 bis 13, dadurch gekennzeichnet, dass Mittel (25) zur axialen Sicherung des Isolierteils (10) vorgesehen sind.

## Claims

1. Device for the electrical and mechanical connection of the component conductors and for the supply or removal of the coolant to or from the hollow conductors (5) of the stator winding bars (3) of electrical machines, in which the hollow conductors (5) and, optionally, the solid conductors (4) of the winding bar are held together by a metallic component (7), which component is connected to a water chamber (2), and the water chamber (2) has connecting fittings (6, 11) for the supply or removal of coolant, and metallic component (7), water chamber (2) and connecting fittings (6, 11) are surrounded by an insulating jacket, characterized in that the insulating jacket comprises a single-component or multi-component insulating part (10) which is pushed essentially from the inside over the metallic component (7), the water chamber (2) and the connecting fittings (6, 11) and overlaps the latter radially and axially, and characterized in that means (12a, 12b 17 and 17, 19, 20 respectively) are provided for filling the spaces between the metallic component and the insulating part (10) or between the connecting fittings (6, 11) and the insulating part (10) both in the region of the metallic component (7) and in the region of the connecting fittings.

2. Connecting device according to Claim 1, characterized in that the insulating part (10) is designed as a single piece and has a U-shaped cross section.

3. Connecting device according to Claim 1, characterized in that the insulating part (10) comprises two insulating parts (103, 104) having an L-shaped cross section, the short limbs being situated radially on the inside (Figure 8b).

4. Connecting device according to Claim 2 or 3, characterized in that the insulating jacket furthermore comprises a cover (16) made of insulating material which is pushed onto the free limbs (10a, 10b) of the U-shaped insulating part (10) or of the L-shaped insulating parts from the outside and is attached to said limbs.

5. Connecting device according to Claim 4, characterized in that the cover (16) is of U-shaped design, is pushed over the free limbs (10a, 10b) of the U-shaped or L-shaped parts on the outside and is preferably attached to the insulating part (10) by means of binding bands (21).

6. Connecting device according to Claim 1, characterized in that the insulating part is of two-component design and comprises two C-shaped shells (105, 106) (Figure 8d, Figure 8e).

7. Connecting device according to Claim 1, characterized in that the insulating part is of two-component design and comprises two L-shaped insulating parts (103', 104'), their short limbs being situated in one case radially on the inside and in the other case radially on the outside (Figure 8c).

8. Connecting device according to any of Claims 1 to 7, characterized in that the spacing means are of two-component design (12a, 12b) in the region of the connecting fittings (6, 11), are composed of insulating material and closely fit the connecting fittings on both sides.

9. Connecting device according to any of Claims 1 to 8, characterized in that the insulating part (10) is attached by means of pins (14) to the said spacing means.

10. Connecting device according to any of Claims 1 to 9, characterized in that the spacing means adjacent to the bar ends are designed as cushions (17) or mats which are pliable in the assembly phase.

11. Connecting device according to Claim 10, characterized in that insulating blocks (19) and/or filling pieces (20) made of insulating material are additionally provided for filling the spaces.

12. Connecting device according to any of Claims 1 to 11, characterized in that cushions or slubbings which are pliable in the assembly phase and are impregnated with insulating resin are inserted between the connecting fittings (6, 11) and the spacing means and/or between the spacing means (12a, 12b) and the insulating part (10).

13. Connecting device according to any of Claims 1 to 7, characterized in that an open-pore pliable foam material which is pliable in the assembly phase and is impregnated with insulating resin is provided as spacing means.

14. Connecting device according to any of Claims 1 to 13, characterized in that means (25) are provided for axially securing the insulating part (10).

## Revendications

1. Dispositif pour la connexion électrique et mécanique de sous-conducteurs et pour l'arrivée ou le départ du liquide de refroidissement vers ou en provenance des conducteurs creux (5) des barres d'enroulement du stator (3) de machines électriques dans lesquelles les conducteurs creux (5) et, le cas échéant, massifs (4) de la barre d'enroulement sont réunis par un composant métallique (7), lequel composant est relié à une cuve à eau (2), et la cuve à eau (2) présente des robinetteries de connexion (6,11) pour l'arrivée ou le départ du liquide de refroidissement, et le composant métallique (7), la cuve à eau (2) et les robinetteries de connexion (6,11) sont entourés par un manchon isolant, caractérisé par le fait que le manchon isolant comprend une pièce isolante (10) en une ou plusieurs parties, laquelle est essentiellement glissée depuis l'intérieur sur le composant métallique (7), la cuve à eau (2) et les robinetteries de connexion (6,11) et fait saillie de ceux-ci dans le sens radial et axial, et que des moyens (12a, 12b, 17 ou 17, 19, 20) sont prévus aussi bien dans la zone du composant métallique (7) que dans la zone des robinetteries de connexion pour combler les vides entre le composant métallique et la pièce isolante (10) ou entre les robinetteries de connexion (6, 11) et la pièce isolante (10).

2. Dispositif de connexion selon la revendication 1, caractérisé par le fait que la pièce isolante (10) est réalisée d'une seule pièce et présente une section en forme de U.

3. Dispositif de connexion selon la revendication 1, caractérisé par le fait que la pièce isolante (10) se compose de deux pièces isolantes (103, 104) ayant une section en forme de L, les montants courts reposant à l'intérieur dans le sens radial (figure 8b).

4. Dispositif de connexion selon la revendication 2 ou 3, caractérisé par le fait que le manchon isolant comporte en plus un couvercle (16) en matériau isolant, lequel est glissé depuis l'extérieur sur les montants libres (10a, 10b) de la pièce isolante (10) en forme de U ou des pièces isolantes en forme de L, et fixé sur ces montants.

5. Dispositif de connexion selon la revendication 4, caractérisé par le fait que le couvercle (16) est réalisé en forme de U et qu'il est glissé à l'extérieur sur les montants libres (10a, 10b) des pièces en forme de U ou en forme de L, et fixé à la pièce isolante (10) de préférence au moyen de bandelettes (21).

6. Dispositif de connexion selon la revendication 1, caractérisé par le fait que la pièce isolante est réalisée en deux parties et se compose de deux coques (105, 106) en forme de C (figure 8d, figure 8e).

7. Dispositif de connexion selon la revendication 1, caractérisé par le fait que la pièce isolante est réalisée en deux parties et se compose de deux pièces isolantes (103', 104') en forme de L, leurs montants courts reposant une fois à l'intérieur dans le sens radial et l'autre montant court reposant une fois à l'extérieur dans le sens radial (figure 8c).

8. Dispositif de connexion selon l'une des revendications 1 à 7, caractérisé par le fait que dans la zone des robinetteries de connexion (6, 11) les moyens d'écartement sont réalisés en deux parties (12a, 12b), sont constitués d'un matériau isolant et épousent la forme des robinetteries de connexion des deux côtés.

9. Dispositif de connexion selon l'une des revendications 1 à 8, caractérisé par le fait que la pièce isolante (10) est fixée auxdits moyens d'écartement à l'aide de goupilles (14).

10. Dispositif de connexion selon l'une des revendications 1 à 9, caractérisé par le fait que les moyens d'écartement voisins des extrémités des barres sont réalisés sous la forme de rembourrages (17) ou de tapis qui sont souples pendant la phase de montage.

11. Dispositif de connexion selon la revendication 10, caractérisé par le fait que des blocs isolants (19) et/ou des pièces de remplissage (20) en matériau isolant sont prévus pour combler les vides.

12. Dispositif de connexion selon l'une des revendications 1 à 11, caractérisé par le fait que des rembourrages ou des mèches qui sont souples pendant la phase de montage et imprégnés de résine isolante sont insérés entre les robinetteries de connexion (6, 11) et les moyens d'écartement et/ou entre les moyens d'écartement (12a, 12b) et la pièce isolante (10).

13. Dispositif de connexion selon l'une des revendications 1 à 7, caractérisé par le fait que le moyen d'écartement prévu est une mousse souple poreuse imprégnée de résine isolante qui est souple pendant la phase de montage.

14. Dispositif de connexion selon l'une des revendications 1 à 13, caractérisé par le fait que des moyens (25) sont prévus pour le blocage axial de la pièce isolante (10).
